Europäisches Patentamt

European Patent Office

Office européen des brevets

(11) Publication number: **0 245 777 B1**

## EUROPEAN PATENT SPECIFICATION

(45) Date of publication of patent specification: **19.08.92**   (51) Int. Cl.5: **H02P 9/42**, H02P 9/04

(21) Application number: **87106616.3**

(22) Date of filing: **07.05.87**

(54) **Control system for variable speed water-wheel generator apparatus.**

(30) Priority: **12.05.86 JP 106641/86**

(43) Date of publication of application:
**19.11.87 Bulletin 87/47**

(45) Publication of the grant of the patent:
**19.08.92 Bulletin 92/34**

(84) Designated Contracting States:
**CH DE FR GB IT LI SE**

(56) References cited:
**EP-A- 243 937**
**EP-A- 0 141 372**
**DE-A- 2 845 930**
**US-A- 4 287 429**

**PATENT ABSTRACTS OF JAPAN, vol. 8, no. 181 (E-261)[1618], 21st August 1984; & JP-A-59 072 998 (**

**PATENT ABSTRACTS OF JAPAN, vol. 9, no. 73 (M-368)[1796], 3rd April 1985; & JP-A-59 203 883**

(73) Proprietor: **HITACHI, LTD.**
**6, Kanda Surugadai 4-chome**
**Chiyoda-ku, Tokyo 101(JP)**

(72) Inventor: **Kuwabara, Takao**
**1-13, Nishinarusawacho-4-chome**
**Hitachi-shi(JP)**
Inventor: **Bando, Akira Narusawa Apartment 55**
**8-3-304, Nishinarusawacho-1-chome**
**Hitachi-shi(JP)**
Inventor: **Haraguchi, Eiji**
**18-1, Yamatedai-3-chome**
**Ibaraki-shi(JP)**
Inventor: **Nakagawa, Hiroto**
**1-1, Hyakuyama Shimamotocho**
**Mishima-gun Osaka(JP)**

(74) Representative: **Patentanwälte Beetz sen. - Beetz jun. Timpe - Siegfried - Schmitt-Fumian**
**Steinsdorfstrasse 10**
**W-8000 München 22(DE)**

## Description

BACKGROUND OF THE INVENTION

This invention relates to a control system for a variable-speed water turbine generator in accordance with the precharacterizing part of claim 1. A known control system for this type is described in JP-A-59-72998 and illustrated in Fig. 1 of the present application.

A water turbine generator conventionally well known and adopted uses a synchronous machine as generator and, therefore, the frequency of generation output has proportional relationship with the rotational number of the water turbine generator. Contrarily, in a variable-speed generator using an induction machine, the rotational speed can be controlled to a value which is separate from and independent of the generated output frequency and so, the rotational number of the water turbine can advantageously be controlled to a value at which efficiency of the water turbine is maximized while maintaining the generated output frequency at a desired frequency of an electric power system.

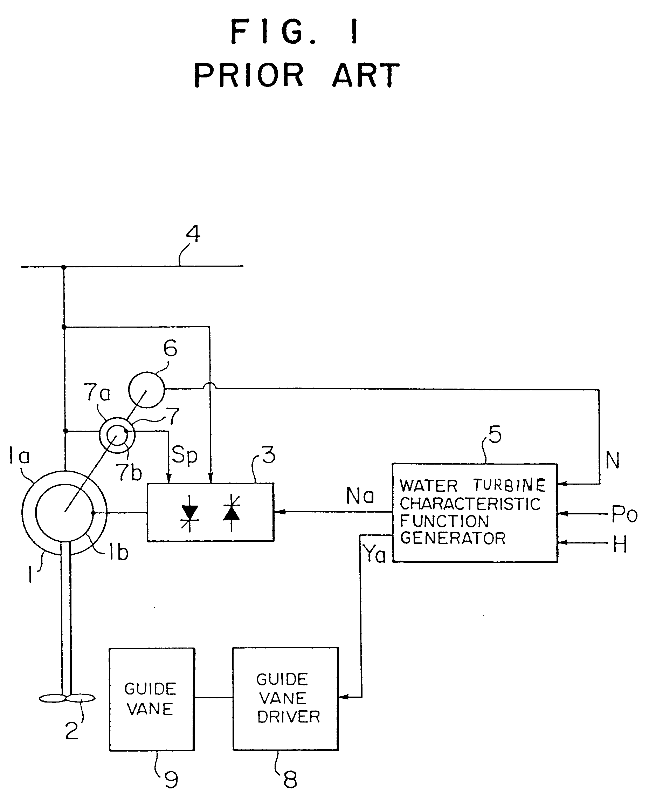

Referrring to Fig. 1, an induction generator 1 with a wound-rotor is rotated by means of a water turbine 2 directly connected to the rotor of the generator. The generator 1 is driven at variable speeds while a secondary winding 1b of the generator 1 being supplied with an AC exciting current which is so adjusted, by means of a frequency converter 3, as to have a frequency corresponding to a slip between the rated frequency of the electric power system and a desired rotational speed of the generator in accordance with the rotational speed of the generator 1, so that AC power of a constant frequency equal to a rated frequency of an electric power system 4 can be generated from a primary winding 1a of the generator 1. A water turbine characteristic function generator 5 is supplied with an actual rotational speed signal N, an output power command signal Po applied externally and a water-level detection signal H and generates an optimum rotational speed command Na and an optimum guide vane opening command Ya which are used for operating the generator apparatus at maximum efficiency. An induction machine 7 for slip phase detection has a rotor directly coupled to the gnerator 1 and a primary winding 7a connected to the output of the generator 1 and it delivers a slip phase signal Sp through a secondary winding 7b. The slip phase signal Sp and the optimum rotational speed command Na are applied to a control unit (not shown) included in the frequency converter 3 in order to control the frequency and internal phase difference angle of the AC exciting current supplied to the secondary winding 1b of the generator 1, in the manner described above. The optimum guide vane opening command Ya is applied to a guide vane driver 8 which in turn controls the opening of guide vanes 9 such that the water-turbine output power $P_T$ can be controlled as desired by an output power command signal.

In the variable-speed water turbine generator it is required that the generated output power is rendered coincident with an output power command issued from, for example, a central load-dispatching office. Further, the rotational speed of the water-turbine and the guide vane opening must be controlled to proper values in consideration of the generated output power, whereby the water turbine can be operated at maximum efficiency at the generated output power. To this end, two operational parameters are adjustable which are represented a) by the frequency converter 3 operative to effect excitation control, such as frequency and internal phase difference angle control, for the rotor and b) by the guide vane opening of the water turbine. Importantly, it should therefore be decided what control items are to be shared by respective operation terminals in realizing a control system. The known control system, however, fails to provide sufficient means in this regard. Especially, where a generated output power control mode is provided independently of the aforementioned optimum rotational speed control mode and optimum guide vane control mode so that three separate control modes are involved, the prior art has absolutely failed to clarify a way of allotting the three control modes to the two operation terminals and compatibly applying thereto those control modes in combination.

Further, in the known reference, the response speed in the rotational speed optimizing control is retarded relative to the response speed in the guide vane control to prevent the water turbine from transiently coming into a specified bad operation or running condition range. Nevertheless, there is a possibility that the slower response speed in the rotational speed optimizing control mode causes the rotational speed to overshoot and transiently go beyond a predetermined permissible variable speed band. This means that the possibility of step-out is disadvantageously increased.

The earlier application EP-A-O 243 937 discloses a variable-speed pumped-storage power generating system. The system is able either to generate power when water flows from a higher reservoir to a lower one, or to utilize excess energy so as to pump water from a lower reservoir to a higher one. An automatic frequency control is carried out during a pumping operation of the system. The system has a variable-speed water turbine generator with a water turbine, a generator having its shaft directly coupled to the shaft of the water turbine and variable guide vanes for controlling the water turbine and an electric power system for receiving generated power. An actual output power detector detects the generated output power of the generator.

The prior art variable-speed pumped storage power generating system includes a function generator generating an optimum speed control signal from a power command signal Po and a head gross $H_{ST}$. A further function generator 13 generates an optimum guide vane opening signal also on the basis of the power command signal Po and the gross head signal $H_{ST}$. I.e. an output controller and a guide vane controller shown in Fig. 1 of EP-A-0 243 937 operate on the basis of characteristic curves in dependence on the mentioned head gross signal as shown in the Figures 3 and 4 of EP-A-0 243 937, respectively.

The present invention intends to solve the problems encountered in the prior art and has for its object to provide a variable-speed water-turbine generator apparatus which can rotationally achieve the generation output control, rotational speed optimizing control and guide vane opening optimizing control at a time and can ensure stable operations within a permissible variable speed band.

According to the invention, the above object can be accomplished by the features set out in the main claim. Dependent claims are directed on preferred ebodiments of the present invention.

**BRIEF DESCRIPTION OF THE DRAWINGS**

Figure 1 is a block diagram illustrating a prior art variable speed water turbine generator and control system therefore;

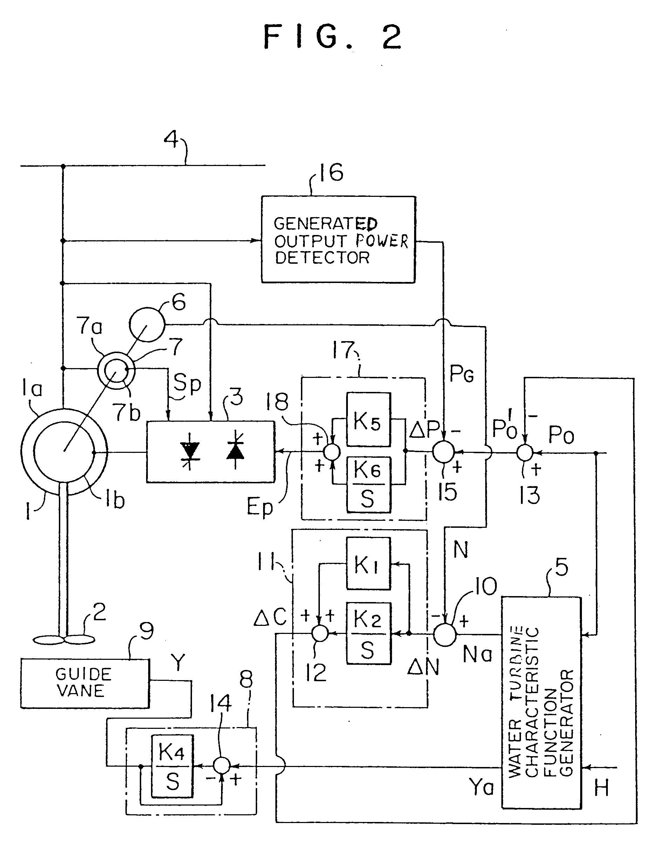

Figure 2 is a block diagram illustrating a control system for a variable speed water turbine generator according to an embodiment of the invention;

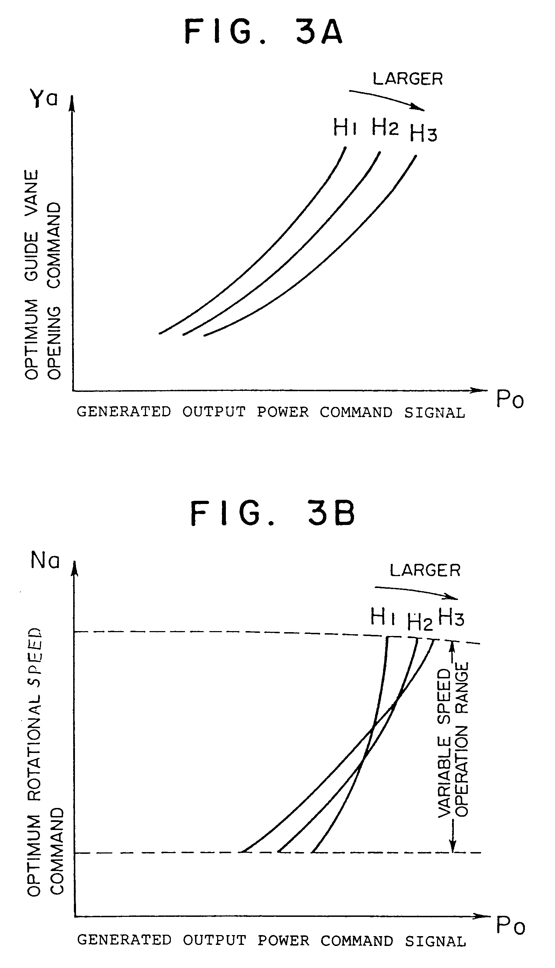

Figures 3A and 3B graphically illustrate characteristics of a water turbine characteristic function generator shown in Fig. 2;

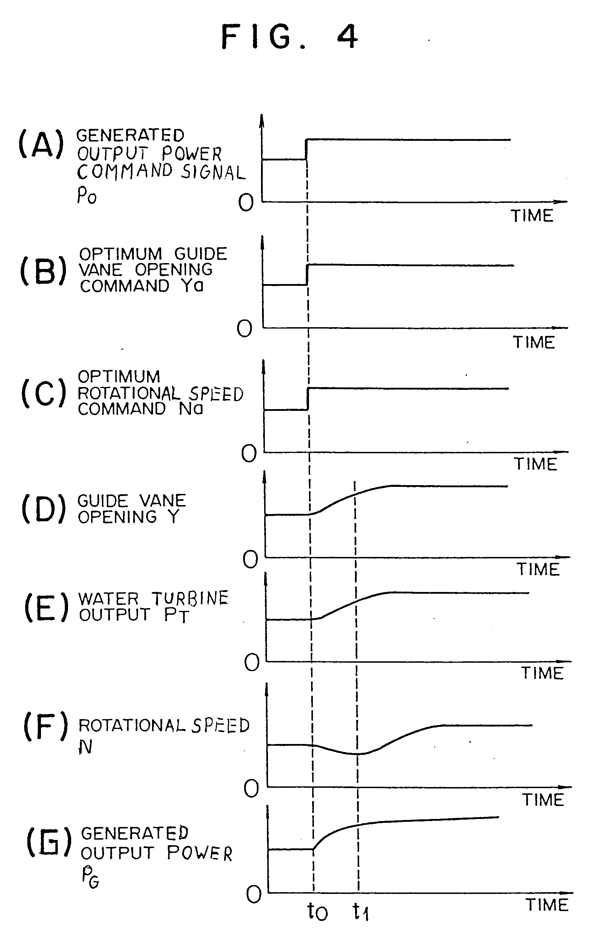

Figure 4 illustrates, at sections (a) through (g), responses occurring in the Fig. 2 system when the power command signal (Po) is increased; and

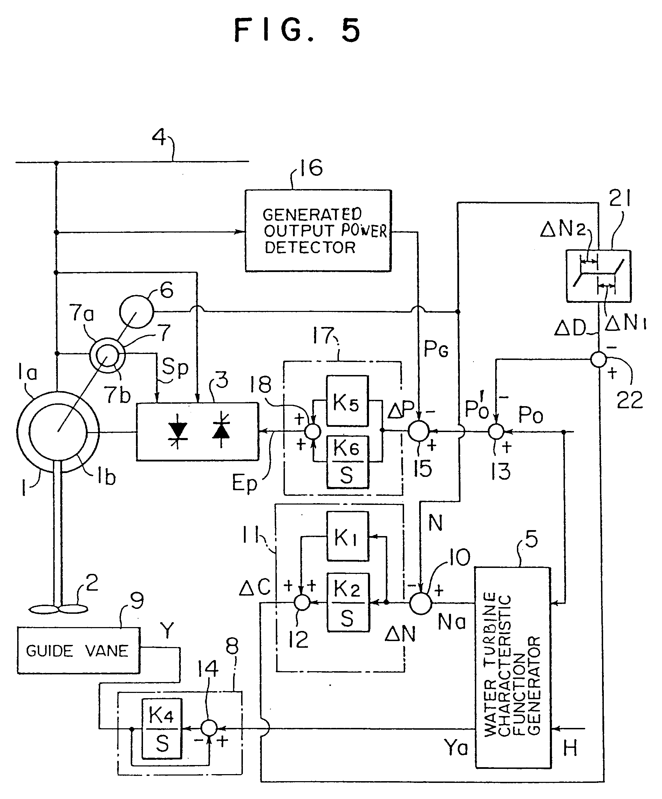

Figure 5 is a block diagram illustrating a control system according to another embodiment of the invention.

DESCRIPTION OF THE PREFERRED EMBODIMENTS

Referring now to Fig. 2, there is illustrated, in block form, a control system according to an embodiment of the invention. In Fig. 2, components like those in Fig. 1 are designated by like reference numerals.

A water turbine characteristic function generator 5 receives a power command signal Po and a water-level detection signal H and generates an optimum rotation speed command Na and an optimum guide vane opening command Ya. A comparator 10 compares the optimum rotation speed command Na with an actual rotational speed signal N detected by a rotational speed detector 6 to produce a difference $\Delta N$ ( = Na - N) which in turn is applied to a computing unit 11. The computing unit 11 includes a proportional element $K_1$, an integration element $K_2/S$ and an adder 12 and produces a correction signal $\Delta C$ which corrects the output power command Po such that the difference $\Delta N$, unless null, is made zero. Thus, the correction signal $\Delta C$ is added at an adder 13 to the externally supplied output command Po and an ultimate power command signal Po' produced from the adder 13 is supplied to a comparator 15.

The optimum guide vane opening command Ya is applied to a guide vane driver 8. The guide vane driver 8 includes an adder 14 and an integration element $K_4/S$ whose output signal is negatively fedback to the adder 14.

The comparator 15 compares the ultimate power command signal Po' applied to one input thereof with an actual output power signal $P_G$ detected by an generated output power detector 16 and applied to the other input and produces a difference $\Delta P$ ( = Po' - $P_G$) which in turn is supplied to a power control unit 17. The power control unit 17, comprised of a proportional element $K_5$, an integration element $K_5/S$ and an adder 18, produces an output signal Ep applied to a frequency converter 3. The frequency converter 3 includes an automatic pulse-phase shifter (not shown) operable under the application of a slip phase signal Sp extracted from a secondary winding 7b of a slip-phase detection induction machine 7 and the output signal Ep from the power control unit 17 and is operative to control firing angles of semiconductor devices such as thyristors so as to adjust electric power supplied to a secondary winding 1b of a wound-rotor induction generator 1. The remaining parts identical to those of the Fig. 1 system need not be described herein.

The water turbine characteristic function generator 5 in Fig. 2 adapted to obtain the optimum rotational speed command Na and the optimum guide vane opening command Ya has characteristics as shown in Figs. 3A and 3B. More particularly, Fig. 3B shows that for a constant head H, the optimum rotational speed command Na is increased to provide higher speeds as the generation output command Po increases but should be confined within a range defined by permissible upper and lower limits for variable speed operations of the water turbine. Fig. 3A shows that for a constant head H, the optimum guide vane opening command Ya is increased to provide larger openings as the power command signal Po increases and that for a constant Po, the Ya is increased to provide larger openings as the head H decreases, where $H_1 < H_2 < H_3$. The function generator 5 is supplied with both the power command signal Po and head H but in the case of a water power station in which the head will not vary by itself to a great extent, the function generator may conveniently determine an optimum guide vane opening command Ya and an optimum rotational speed command Na under the application of only a power command signal Po. When the power command signal Po is increased, the water turbine characteristic function generator 5 operates to increase the Ya and Na as described above. In this operation, responses occur in the control system of Fig. 2 as will be described below.

Specifically, when the power command signal Po is increased stepwise as illustrated at section (a) in Fig. 4 in order to increase the generation output $P_G$, for example, stepwise at time $T_o$, the generation output $P_G$ or the generator 1 is caused to increase to follow a variation in the power command signal Po but in this phase, the ultimate power command signal Po' is smaller than the power command signal Po as will be clarified later and consequently the increased generated output power $P_G$ is below the command value Po as illustrated at section (g) in Fig. 4. The ultimate power command signal Po' is processed by the integration element $K_6/S$ in power control unit 17 cooperative with a negative feedback circuit comprised of the power control unit 17, frequency converter 3, generator 1, generated output power detector 16 and comparator 15, so that the difference $\Delta P$ (= Po' - $P_G$) is gradually decreased to finally establish $P_G$ = Po'. On the other hand, the response of opening Y of the guide vane 9 shown at (d) in Fig. 4 to the optimum guide vane opening command Ya shown at (b) in Fig. 4 is slower than the response of the generated output power $P_G$ to the ultimate power command signal Po'. Accordingly, the water turbine output $P_T$ is initially increased more depressively than the generated output power $P_G$ as illustrated at (e) in Fig. 4, with the result that as shown at (f) in Fig. 4, the rotational speed N is temporarily decelerated after the abrupt change of the power command signal Po until it thereafter stops decreasing at time $t_1$ that the water turbine output $P_T$ which is increasing as the guide vane opening Y increases substantially reflects the generation output $P_G$ which has been raised earlier than the $P_T$. Since at that time $t_1$ the actual rotational speed N is lower than the optimum rotational speed command Na shown at (c) in Fig. 4, providing a positive difference $\Delta N$ (= Na - N) and consequently a positive correction signal $\Delta C$ delivered by the computing unit 11, an ultimate power command signal Po' = Po - $\Delta C$ corrected by this positive correction signal $\Delta C$ becomes smaller than the power command signal Po, thus producing an actual generation output $P_G$ which is slightly smaller than the power command signal Po. After time $t_1$, the guide vane opening Y continues to increase until it reflects the power command signal Po and consequently, the difference between water turbine output $P_T$ and generated output power $P_G$ grows to increase the rotational speed N until it approaches the optimum rotational speed command Na along with concurrent approach of the correction signal $\Delta C$ to zero, whereby eventually the ultimate generation output command coincides with the power command signal Po and the rotational speed N equals the optimum rotational speed command Na. Specifically, the difference $\Delta N$ (= Na - N) is gradually decreased to reach the stationary condition of N = Na by means of the integration element $K_2/S$ in computing unit 11 cooperative with a negative feedback circuit comprised of the computing unit 11, adder 13, comparator 15, power control unit 17, frequency converter 3, generator 1, rotational speed detector 6 and comparator 10. The opening Y of the guide vane 9 is controlled through a negative feedback circuit comprised of the integration element $K_4/S$ and adder 14 included in the guide vane driver 8 such that Ya - Y = 0 is eventually settled, which means that Y is brought into coincidence with Ya.

In the above operation, it is preferred that the proportional gain $K_1$ and the integration gain $K_2$ be chosen such that the response of the computing unit 11 to $\Delta N$ (= optimum rotational speed command Na - rotational speed N) is much slower than the response of the generated output power $P_G$ to the ultimate power command signal Po' and the response of the actual guide vane opening Y to the optimum guide vane opening command Ya.

Incidentally, when a large power command signal is applied or when a power command signal is additionally changed under a condition that the rotational speed has already deviated considerably from an optimum value during the preceding transient phenomenon still persisting, the rotational speed transiently varies to a great extent due to the fact that the response speed in the rotation speed optimizing control is slower as described previously and in extremities, there is a possibility that the rotational speed goes beyond the upper limit or the lower limit of a permissible variable speed operational band admitted by the frequency converter. This problem can be dealt with by another embodiment of the invention as illustrated in Fig. 5. In this embodiment, there is additionally provided a power modifying signal function generator 21 adapted to produce a positive power command modifying signal when the rotational speed N increases by $\Delta N_1$ in excess of a synchronous speed corresponding to zero slip and conversely, a negative power command modifying signal when the rotational speed N falls by $\Delta N_2$ below the synchronous speed. The output signal, i.e., power modifying signal $\Delta D$ is also combined with the correction signal $\Delta C$ so as to be reflected in the ultimate power command signal Po'.

Thus, when the rotational speed N tends to increase beyond the variable speed band, the Po' or the generated output power $P_G$ is increased to decrease the rotational speed, thereby suppressing an excessive increase in the rotational speed.

Conversely, when the rotational speed N tends to decrease beyond the variable speed band, the Po' is decreased, consequently, the generated output power $P_G$ is decreased to increase the rotational speed, thereby suppressing an excessive decrease in the rotational speed.

In this manner, the rotational speed N can steadily be confined within the variable speed band.

As described above, according to the present invention, the generated output power control, rotational speed optimizing control and guide vane opening optimizing control can all be performed compatibly at a time and stable variable speed operations within the permissible variable speed band can be ensured.

**Claims**

1. A control system for a variable speed water turbine generator with
   - a water turbine (2),
   - a generator (1) with a primary winding (1a) and a secondary winding (1b), having its shaft directly coupled to the shaft of the water turbine (2),
   - variable guide vane driving means (8) for driving variable guide vanes (9) of the water turbine (2) and
   - an electric power system (4) for receiving generated power, said control system comprising
   - an actual rotational speed detector (6),
   - means for providing an output power command signal (Po),
   - means (5) for producing a desired rotational speed command signal (Na), and
   - a frequency converter (3) connected to the electric power system (4) and said secondary winding (1b) of said generator (1) and operated synchronously with the power system (4),
   wherein said control system further comprises:
   - an actual output power detector (16) for detecting the generated output power of the generator (1),
   - power control means (15, 17) for comparing said output power command signal (Po) and the actual output power signal of the actual output power detector (16) and for controlling through the frequency Converter (3) the actual output power to meet said output power command signal (Po),
   - speed control means (10, 11) for comparing said desired rotational speed command signal (Na) and an output signal of said actual rotational speed detector (6) and for controlling through the power control means (15,17) the actual rotational speed (N) to meet said desired rotational speed command signal (Na),
   - operation mode combining means for combining said power control means (15, 17) and said speed control means (10, 11) to apply a composite control signal or control signals to the generator (1) to accomplish the control functions in parallel, wherein the response speed of said power control means (15, 17) is adjusted faster than the response speed of said means (8) for driving said variable guide vanes (9) of said water turbine (2).

2. The control system according to claim 1, characterized in that
   the response speed of the power control means (15, 17) is faster than the response speed of the speed control means (10, 11).

3. The control system according to claims 1 or 2, wherein
   - the generator (1) includes a primary winding (1a) connected to the electric power system (4) and a secondary winding (1b) connected to the electric power system (4) through the frequency converter (3),
   **characterized** in that
   - the means (5) for producing a desired rotational speed command signal (Na) includes a first function generator responsive to at least the output power command signal (Po) to determine the rotational speed command signal (Na) and further includes a second function generator responsive to at least said output power command signal (Po) to determine an opening command signal (Ya) for the variable guide vanes (9) of the water turbine (2), that
   - it further comprises an adder (13) for adding the output power command signal (Po) to the inverted output signal of said rotational speed control means (10, 11) to determine a combined output command signal (Po'), that

- the power control means (15, 17) produce and output signal in accordance with a signal indicative of a difference between the combined output command signal (Po') of the adder (13) and an output signal of the actual output power detector (16) so as to control the firing angles of the frequency converter means (3), and that

- the driving means controls the position of the variable guide vane (9) so that this letter meet the target position corresponding to the opening command signal (Ya).

4. The control system according to claim 3, characterized in that
said first and second function generator increase the respective command values (Na, Ya) for the rotational speed (N) and the variable guide vanes (9) as said output power command signal (Po) increases.

5. The control system according to claim 3, characterized in further comprising
means (21, 22) adapted to produce a positive power command modifying signal ($\Delta D$) only when the rotational speed N increases by $\Delta N_1$ in excess of a synchronous speed and a negative power command modifying signal ($\Delta D$) only when the rotational speed N falls by $\Delta N_2$ below the synchronous speed for controlling said frequency converter means (3) so that said combined output command signal (Po') is commanded in such a way to pull the speed (N) back into a predetermined speed band ($\Delta N_1, \Delta N_2$) when the speed happens to go out of said predetermined speed band ($\Delta N_1, \Delta N_2$).

**Patentansprüche**

1. Steuerungssystem für einen Wasserturbinen-Generator variabler Drehzahl mit
    - einer Wasserturbine (2),
    - einem Generator (1) mit einer Primärwicklung (1a) und einer Sekundärwicklung (1b), dessen Welle direkt mit der Welle der Wasserturbine (2) verbunden ist,
    - einer Betätigungseinrichtung (8) für veränderliche Leitschaufeln zum Antreiben der veränderlichen Leitschaufeln (9) der Wasserturbine (2) und

- einem elektrischen Leistungssystem (4), das die erzeugte Leistung aufnimmt, wobei das Steuerungssystem aufweist
- einen Detektor (6) für die tatsächliche Drehzahl,
- eine Einrichtung zum Bereitstellen eines Befehlssignals (Po) für die Ausgangsleistung,
- eine Einrichtung (5) zum Erzeugen eines Befehlssignals (Na) für die gewünschte Drehzahl, und
- einen Frequenzwandler (3), der mit dem elektrischen Leistungssystem (4) und der Primärwicklung (1b) des Generators (1) verbunden ist und der synchron mit dem Leistungssystem (4) betrieben wird,

wobei das Steuerungssystem außerdem aufweist:

- einen Detektor (16) für die tatsächliche Ausgangsleistung zum Erfassen der erzeugten Ausgangsleistung des Generators (1),
- eine Leistungssteuerungseinrichtung (15, 17) zum Vergleichen des Befehlssignals (Po) für die Ausgangsleistung und des Signals des Detektors (16) für die tatsächliche Ausgangsleistung, sowie zum Steuern der tatsächlichen Ausgangsleistung über den Frequenzwandler (3) derart, daß sie dem Befehlssignal (Po) für die Ausgangsleistung entspricht,
- eine Drehzahlsteuerungseinrichtung (10, 11) zum Vergleichen des Befehlssignals (Na) für die gewünschte Drehzahl und des Ausgangssignals des Detektors (6) der tatsächlichen Drehzahl, sowie zum Steuern der tatsächlichen Drehzahl (N) über die Leistungssteuerungseinrichtung (15, 17) derart, daß sie dem Befehlssignal (Na) für die gewünschte Drehzahl entspricht,
- eine Einrichtung zum Kombinieren der Leistungssteuerungseinrichtung (15, 17) und der Drehzahlsteuerungseinrichtung (10, 11), um ein zusammengesetztes Steuerungssignal oder Steuerungssignale an den Generator (1) anzulegen, um die Steuerungsfunktionen parallel zu verwirklichen, wobei

die Ansprechgeschwindigkeit der Leistungssteuerungseinrichtung (15, 17) so eingestellt ist, daß sie schneller ist als die Ansprechgeschwindigkeit der Einrichtung (8) zum Betätigen der veränderlichen Leitschaufeln (9) der Wasserturbine (2).

2. Steuerungssystem nach Anspruch 1,

dadurch gekennzeichnet, daß die Ansprechgeschwindigkeit der Leistungssteuerungseinrichtung (15, 17) schneller ist als die Ansprechgeschwindigkeit der Drehzahlsteuerungseinrichtung (10, 11).

3. Steuerungssystem nach Anspruch 1 oder 2, bei dem
   - der Generator (1) eine Primärwicklung (1a) aufweist, die mit dem elektrischen Leistungssystem (4) verbunden ist, sowie eine Sekundärwicklung (1b), die mit dem elektrischen Leistungssystem (4) über den Frequenzwandler (3) verbunden ist,

   dadurch gekennzeichnet, daß
   - die Einrichtung (5) zum Erzeugen eines Befehlssignals (Na) für eine gewünschte Drehzahl einen ersten Funktionsgenerator aufweist, der zumindest nach Maßgabe des Befehlssignals (Po) für die Ausgangsleistung wirkt, um das Befehlssignal (Na) für die Drehzahl zu bestimmen, und daß sie außerdem einen zweiten Funktionsgenerator aufweist, der nach Maßgabe zumindest des Befehlssignals (Po) für die Ausgangsleistung wirkt, um ein Öffnungs-Befehlssignal (Ya) für die veränderlichen Leitschaufeln (9) der Wasserturbine (2) zu bestimmen,
   - es außerdem einen Addierer (13) aufweist zum Addieren des Befehlssignals (Po) für die Ausgangsleistung zum invertierten Ausgangssignal der Drehzahlsteuerungseinrichtung (10, 11), um ein kombiniertes Ausgangsbefehlssignal (Po') zu bestimmen,
   - die Leistungssteuerungseinrichtung (15, 17) ein Ausgangssignal erzeugt entsprechend einem Signal, das die Differenz zwischen dem kombinierten Ausgangs-Befehlssignal (Po') des Addierers (13) und dem Ausgangssignal des Detektors (16) für die tatsächliche Ausgangsleistung anzeigt, um die Zündwinkel der Frequenzwandlereinrichtung (3) zu steuern, und
   - die Betätigungseinrichtung die Position der veränderlichen Leitschaufeln (9) derart steuert, daß letztere die Zielposition entsprechend dem Öffnungsbefehlssignal (Ya) einnehmen.

4. Steuerungssystem nach Anspruch 3, dadurch gekennzeichnet, daß der erste und der zweite Funktionsgenerator die jeweiligen Befehlswerte (Na, Ya) für die Drehzahl (N) und die veränderlichen Leitschaufeln (9) vergrößern, wenn das Befehlssignal (Po) für die Ausgangsleistung zunimmt.

5. Steuerungssystem nach Anspruch 3, weiter gekennzeichnet durch eine Einrichtung (21, 22), die dazu ausgelegt ist, ein positives Modifizierungssignal ($\Delta D$) für den Leistungsbefehl nur dann zu erzeugen, wenn die Drehzahl N eine Synchrondrehzahl um $\Delta N_1$ überschreitet und ein negatives Modifikationssignal ($\Delta D$) für den Leistungsbefehl nur dann zu erzeugen, wenn die Drehzahl N unter die Synchrondrehzahl um $\Delta N_2$ sinkt, um die Frequenzwandlereinrichtung (3) derart zu steuern, daß das kombinierte Ausgangsbefehlssignal (Po') so geführt wird, daß die Drehzahl N in einen vorbestimmten Geschwindigkeitsbereich ($\Delta N_1$, $\Delta N_2$) zurückgebracht wird, wenn die Drehzahl einmal den Geschwindigkeitsbereich ($\Delta N_1$, $\Delta N_2$) verläßt.

**Revendications**

1. Système de commande pour un générateur de turbine hydraulique à vitesse variable, comprenant
   - une turbine hydraulique (2),
   - un générateur (1) comportant un enroulement primaire (1a) et un enroulement secondaire (1b) et dont l'arbre est couplé directement à l'arbre de la turbine hydraulique (2),
   - des moyens (8) d'entraînement d'aubes directrices variables pour entraîner des aubes directrices variables (9) de la turbine hydraulique (2), et
   - un système d'alimentation en énergie électrique (4) pour recevoir la puissance produite,

   ledit système de commande comprenant :
   - un détecteur (6) de la vitesse de rotation réelle,
   - des moyens pour envoyer un signal (Po) de commande de la puissance de sortie,
   - des moyens (5) pour produire un signal (Na) de commande de la vitesse de rotation désirée, et
   - un convertisseur de fréquence (3) raccordé au système d'alimentation en énergie électrique (4) et audit enroulement secondaire (1b) dudit générateur (1) et fonctionnant d'une manière synchrone avec le système d'alimentation en énergie (4),

   dans lequel ledit système de commande comporte en outre :
   - un détecteur (16) de la puissance de sortie réelle pour détecter la puissance de sortie produite par le générateur (1),

- des moyens (15,17) de commande de puissance pour comparer ledit signal (Po) de commande de la puissance de sortie et le signal de sortie réel du détecteur (16) de la puissance de sortie réelle et pour commander, au moyen du convertisseur de fréquence (3), la puissance de sortie réelle pour qu'elle soit conforme audit signal (Po) de commande de la puissance de sortie,

- des moyens de commande de vitesse (10,11) pour comparer ledit signal (Na) de commande de la vitesse de rotation désirée et un signal de sortie dudit détecteur (6) de la vitesse de rotation réelle et commander, à l'aide des moyens de commande de puissance (15,17), la vitesse de rotation réelle (N), pour qu'elle soit conforme audit signal (Na) de commande de la vitesse de rotation désirée,

- des moyens de combinaison de modes de fonctionnement pour combiner lesdits moyens de commande de puissance (15,17) et lesdits moyens de commande de vitesse (10,11) pour l'envoi d'un signal de commande composite ou de signaux de commande au générateur (1) pour exécuter en parallèle les fonctions de commande, et la vitesse de réponse desdits moyens de commande de puissance (15,17) étant réglée de manière à être supérieure à la vitesse de réponse desdits moyens (8) pour entraîner lesdites aubes directrices variables (9) de ladite turbine hydraulique (2).

2. Système de commande selon la revendication 1,
   caractérisé en ce que
   la vitesse de réponse des moyens de commande de puissance (15,17) est supérieure à la vitesse de réponse des moyens de commande de vitesse (10,11).

3. Système de commande selon les revendications 1 ou 2, dans lequel
   - le générateur (1) comprend un enroulement primaire (1a) raccordé au système d'alimentation en énergie électrique (4) et un enroulement secondaire (1b) raccordé au système d'alimentation en énergie électrique (4) par l'intermédiaire du convertisseur de fréquence (3),
   caractérisé en ce que
   - les moyens (5) pour produire un signal (Na) de commande de la vitesse de rotation désirée comprennent un premier générateur de fonction sensible au moins au signal (Po) de commande de l'énergie de sortie pour déterminer le signal (Na) de commande de la vitesse de rotation et comprend en outre un second générateur de fonction sensible au moins audit signal (Po) de commande de la puissance de sortie pour déterminer un signal de commande d'ouverture (Ya) pour les aubes directrices variables (9) de la turbine hydraulique (2), et

- qu'il comporte en outre un additionneur (13) pour ajouter le signal (Po) de commande de la puissance de sortie au signal de sortie inversé desdits moyens (10,11) de commande de la vitesse de rotation pour déterminer un signal (Po') de commande de sortie combiné,

- que les moyens de commande de puissance (15,17) produisent et délivrent un signal en fonction d'un signal indicatif d'une différence entre le signal (Po') de commande de sortie combiné de l'additionneur (13) et un signal de sortie du détecteur (16) de puissance de sortie réelle de manière à commander les angles d'amorçage des moyens formant convertisseur de fréquence (3), et

- les moyens d'entraînement commandent la position des aubes directrices variables (9) de sorte que ces dernières se règlent conformément à la position cible correspondant au signal de commande d'ouverture (Ya).

4. Système de commande selon la revendication 3,
   caractérisé en ce que
   lesdits premier et second générateurs de fonctions augmentent les valeurs de commande respectives (Na,Ya) pour la vitesse de rotation (N) et les aubes directrices variables (9) lorsque ledit signal (Po) de commande de la puissance de sortie augmente.

5. Système de commande selon la revendication 3,
   caractérisé en ce qu'il comporte en outre des moyens (21,22) aptes à délivrer un signal ($\Delta$D) modifiant la commande de puissance positive uniquement lorsque la vitesse de rotation N augmente de $\Delta N_1$ par rapport à une vitesse synchrone, et un signal ($\Delta$D) de modification de la commande de puissance négative uniquement lorsque la vitesse de rotation N diminue de $\Delta N_2$ par rapport à la vitesse synchrone pour commander lesdits moyens formant convertisseur de fréquence (3) de sorte que ledit signal (Po') de commande de sortie combiné est commandé de manière à ramener la vitesse (N) dans une plage prédéterminée de vitesses ($\Delta N_1, \Delta N_2$) lorsqu'il arrive que la vitesse sort de ladite plage prédéterminée de vitesses ($\Delta N_1, \Delta N_2$).

# FIG. 1
# PRIOR ART

WATER TURBINE
CHARACTERISTIC
FUNCTION
GENERATOR

GUIDE
VANE

GUIDE
VANE
DRIVER

EP 0 245 777 B1

# FIG. 2

11

# FIG. 3A

# FIG. 3B

# FIG. 4

(A) GENERATED OUTPUT POWER COMMAND SIGNAL $P_0$

(B) OPTIMUM GUIDE VANE OPENING COMMAND $Y_a$

(C) OPTIMUM ROTATIONAL SPEED COMMAND $N_a$

(D) GUIDE VANE OPENING $Y$

(E) WATER TURBINE OUTPUT $P_T$

(F) ROTATIONAL SPEED $N$

(G) GENERATED OUTPUT POWER $P_G$

TIME

$t_0$ $t_1$

# FIG. 5